# EUROPEAN PATENT SPECIFICATION

(11) **EP 3 054 398 B1**
(45) Date of publication and mention of the grant of the patent: **12.09.2018**
(21) Application number: 15192058.4
(22) Date of filing: 29.10.2015
(51) Int. Cl.: G06F 21/85

(54) **METHOD AND SYSTEM FOR PERFORMING SECURE I/O OPERATION IN A PLUGGABLE FLASH STORAGE DEVICE**
VERFAHREN UND SYSTEM ZUR DURCHFÜHRUNG EINES SICHEREN E/A-BETRIEBS IN EINER FLASHSPEICHERVORRICHTUNG
PROCÉDÉ ET SYSTÈME PERMETTANT D'EFFECTUER UNE OPÉRATION D'E/S SÉCURISÉE DANS UN DISPOSITIF DE STOCKAGE FLASH ENFICHABLE

(30) Priority: 05.02.2015 IN 582CH2015; 20.03.2015 US 201514664005
(43) Date of publication of application: 10.08.2016
(73) Proprietor: Wipro Limited, 560 035 Karnataka (IN)
(72) Inventor: CHAKHAIYAR, Madhukar Gunjan, 823001 Bihar (IN)
(74) Representative: Finnegan Europe LLP

(56) References cited:
- A. N. MAGDUM ET AL: "A Secure Data Transfer Algorithm for USB Mass Storage Devices to Protect Documents", INTERNATIONAL JOURNAL OF EMERGING ENGINEERING RESEARCH AND TECHNOLOGY,, vol. 2, no. 4, 31 July 2014 (2014-07-31), pages 78-84, XP055271064, ISSN: 2349-4395
- BO CHEN ET AL: "A Secure Access Authentication Scheme for Removable Storage Media", JOURNAL OF INFORMATION AND COMPUTATIONAL SCIENCE, vol. 9, no. 15, 30 November 2012 (2012-11-30), pages 4353-4363, XP055271071, CN ISSN: 1548-7741

## Description

### FIELD OF THE DISCLOSURE

The present subject matter is related in general to data security, and more particularly, but not exclusively to, a method and system for performing secure read/write operation in a pluggable flash storage device.

### BACKGROUND

The protection of data stored in pluggable flash storage devices is of growing importance. An example of a pluggable flash storage device comprises a flash memory data storage device integrated with a Universal Serial Bus (USB) interface, and which is typically removable and rewriteable. The pluggable flash storage device is generally used for persistent cache offload for storage area network (SAN) controllers in a SAN array. In cases when the storage controller restarts or loses power, the storage controller immediately flushes the cached data to the pluggable flash storage device. In addition, the pluggable flash storage device also stores data like metadata, code images, diagnostic data such as core files and log files, and extended diagnostics associated with the storage controller.

However, if an unauthorized user access is made to the pluggable flash storage device, bad data or malware or a virus could be inserted to the pluggable flash storage device. Further, if the pluggable flash storage device is hacked by an unauthorized user, then the stored data may be damaged. In both cases, the result could be catastrophic and the SAN storage controller could start malfunctioning, or undergo crash or could hang up.

A. N. Magdum et al.: "A Secure Data Transfer Algorithm for USB Mass Storage Devices to Protect Documents," International Journal of Emerging Engineering Research And Technology, Vol. 2, No. 4. (31 July, 2014) relates to a secure data transfer algorithm for USB mass storage devices. A user wanting to transmit a file to a storage device via a USB interface must input a user name and password, which is communicated to an authentication server. After verifying the authenticity of the user, the authentication server generates a session key for encryption.

Bo Chen et al.: "A Secure Access Authentication Scheme for Removal Storage Media," Journal of Information and Computation Science, Vol. 9, No. 15 (30 November, 2012) relates to a secure access authentication scheme for removable storage media, which integrates the unique authentication of removable storage media and user information.

### SUMMARY

In accordance with the invention, there is provided: a method of performing a secure write operation into a pluggable flash storage device, as recited by claim 1; a system for performing a secure write operation into a pluggable flash storage device, as recited by claim 10; and a non-transitory computer readable medium as recited by claim 12.

One or more shortcomings of the prior art are overcome and additional advantages are provided through the present disclosure. Additional features and advantages are realized through the techniques of the present disclosure. Other embodiments and aspects of the disclosure are described in detail herein and are considered a part of the claimed disclosure.

Accordingly, the present disclosure relates to a method of performing secure read/write operation in a pluggable flash storage device. The method comprises the step of receiving one or more requests for at least one of writing and reading of data in/from the pluggable flash storage device. Upon receiving a request for writing data, the storage device is authenticated based on a predetermined signature of the pluggable flash storage device. Upon authenticating the storage device, the method performs authentication of at least one of a user and a storage controller who made the request by comparing a write access key provided to at least one of user and the storage controller with a predetermined write access key. On authenticating the pluggable flash storage device and at least one of the user and the storage controller, the method performs a write operation of data in the pluggable flash storage device.

The present disclosure also relates to a method of performing a secure read/write operation in a pluggable flash storage device, said method comprising: receiving, from at least one of a user and a storage controller, one or more requests for at least one of writing and reading of data in/from the pluggable flash storage device; upon receiving a request for reading data, authenticating at least one of the user and the storage controller by comparing a read access key provided to at least one of user and the storage controller with a predetermined read access key; and performing a read operation of data from the pluggable flash storage device upon authenticating at least one of the user and the storage controller.

Further, the present disclosure relates to a system for performing a secure read/write operation in a pluggable flash storage device. The system comprises a user IO request queue for receiving one or more requests for at least one of reading and writing of data from at least one of a user and a storage controller. The system further comprises the pluggable flash storage device, an IO engine coupled with the pluggable flash storage device and the storage controller coupled with the user IO request queue and the IO engine. The storage controller comprises at least a device authentication and data security (DADS) component configured to receive, from the user IO request queue, the one or more requests for writing data. Upon receiving the request, the DADS component authenticates the pluggable flash storage device based on a predetermined signature of the pluggable flash storage device and also authenticates at least one of user and the storage controller by comparing a write access key provided to at least one of user and the storage controller with a predetermined write access key. Upon authenticating the pluggable flash storage device and at least one of the user and the storage controller, the DADS component performs write operation of data in the pluggable flash storage device.

The DADS component may comprise a hash key generating and authenticating unit configured to generate the predetermined signature of the pluggable flash storage device by the steps of: extracting information associated with the pluggable flash storage device; generating a pseudo number based on the extracted information and storing the generated pseudo number in the predefined memory location of the storage controller; processing the pseudo number using hash function to generate a hashed value; and encrypting the hashed value into the predetermined signature of the pluggable flash storage device. The information associated with the pluggable flash storage device may include a physical serial number, a model number, a manufacturing identity number and/or a name of a manufacturer.

The hash key generating and authenticating unit may be configured to authenticate the pluggable flash storage device by the steps of: determining signature of the pluggable flash storage device stored in a predefined memory location of the pluggable flash storage device; decrypting the determined signature into a hashed value; generating a pseudo number based on the hashed value; comparing the generated pseudo number of the pluggable flash storage device with a predetermined pseudo number stored in the predefined memory location of the storage controller; and authenticating the pluggable flash storage device based on comparison.

The DADS component may further comprise a session and write control unit configured to: determine a last session ID of a last session established between the authenticated pluggable flash storage device and at least one of the user and the storage controller; upon determining the last session ID, perform write operation of unfinished data of the last session; and create a new session between the authenticated pluggable flash storage device and at least one of the user and the storage controller based on the last session ID for performing write operation of data in the pluggable flash storage device.

The DADS component may further comprise an encryption and compression unit configured to perform the write operation of data in the pluggable flash storage device by the steps of: encrypting the data to be written in the pluggable flash storage device; compressing the encrypted data into a compressed data; and storing the compressed data in the predetermined memory location of the pluggable flash storage device.

The DADS component may be further configured to: receive, from at least one of user or the storage controller, a request for reading of data from the pluggable flash storage device; authenticate at least one of the user and the storage controller by comparing a read access key provided to at least one of user and the storage controller with a predetermined read access key; upon authenticating, extract the compressed data from the predefined memory location of the pluggable flash storage device; decompress the extracted compressed data to obtain an encrypted data; decrypt the encrypted data to generate the decrypted data; and perform read operation of the decrypted data from the pluggable flash storage device.

The system may further comprise a dedicated controller cache coupled with the storage controller, configured to store predetermined write access key, the predetermined read access key, the pseudo number and the last session ID are stored in predefined memory location of the storage controller.

Furthermore, the present disclosure relates to a non-transitory computer readable medium including instructions stored thereon that when processed by at least one processor cause a system to perform the act of receiving one or more request for at least one of writing and reading of data in/from the pluggable flash storage device. Further, the instructions cause the processor to authenticate the pluggable flash storage device based on a predetermined signature of the pluggable flash storage device and also authenticate at least one of user and the storage controller by comparing a write access key provided to at least one of user and the storage controller with a predetermined write access key. Upon authenticating the pluggable flash storage device and at least one of the user and the storage controller, the processor is further configured to perform write operation of data in the pluggable flash storage device.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE DRAWINGS

The accompanying drawings, which are incorporated in and constitute a part of this disclosure, illustrate exemplary embodiments and, together with the description, serve to explain the disclosed principles. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:
**Figure 1** illustrates a block diagram of a system for performing read/write operation in a pluggable flash storage device;
**Figure 2** illustrates a block diagram of an exemplary system for performing read/write operation in a pluggable flash storage device in accordance with some embodiments of the present disclosure;
**Figures 3a** and **3b** illustrate block diagram of DADS component and dedicated controller cache respectively in accordance with some embodiments of the present disclosure;
**Figure 4** illustrates a flowchart of an exemplary method of performing write operation into the pluggable flash storage device in accordance with some embodiments of the present disclosure;
**Figure 5** illustrates a flowchart of an exemplary method of performing read operation from the pluggable flash storage device in accordance with some embodiments of the present disclosure.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and executed by a computer or processor, whether or not such computer or processor is explicitly shown.

### DETAILED DESCRIPTION

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

While the disclosure is susceptible to various modifications and alternative forms, a specific embodiment thereof has been shown by way of example in the drawings and will be described in detail below. It should be understood, however that it is not intended to limit the disclosure to the particular forms disclosed, but on the contrary, the disclosure is to cover all modifications, equivalents, and alternative falling within the scope of the disclosure.

The terms "comprises", "comprising", or any other variations thereof, are intended to cover a non-exclusive inclusion, such that a setup, device or method that comprises a list of components or steps does not include only those components or steps but may include other components or steps not expressly listed or inherent to such setup or device or method. In other words, one or more elements in a system or apparatus proceeded by "comprises... a" does not, without more constraints, preclude the existence of other elements or additional elements in the system or apparatus.

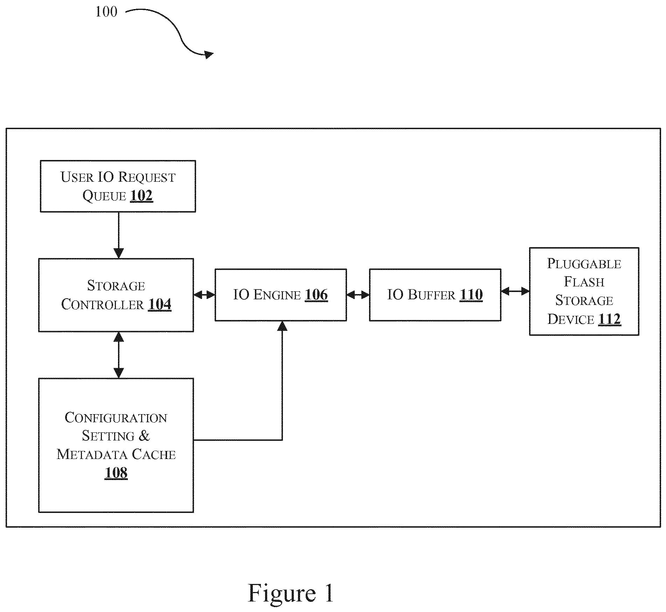

**Figure 1** illustrates a SAN array **100** comprising a storage controller, a pluggable flash storage device and related modules.

The SAN array **100** (alternatively referred to as system **100**) comprises a User Input/Output (IO) request queue **102,** storage controller **104,** IO Engine **106,** configuration setting and metadata cache **108,** IO buffer **110** and pluggable flash storage device **112** (interchangeably referred to as storage device **112**). The system **100** receives a request for read/write operation from/in the storage device **112.** The request is made by the user or by the storage controller **104.** The user IO request queue **102** receives and stores the request in the order of receipt and forwards the request to the storage controller **104** for further processing.

The storage controller **104** receives the request from the user IO request queue **102** and instructs the IO engine **106** to perform the requested read/write operation from/to the storage device **112.** In case of a write operation, the IO buffer **110** buffers the data to be written into the storage device **112** and the IO engine **106** retrieves the buffered data from the IO buffer **110** before writing the data. In case the storage controller **104** restarts or loses power and if the user or the storage controller **104** had searched for configuration and metadata including controller firmware image with configuration setting, metadata, diagnostic data such as core files and log files, and extended diagnostics of storage controller stored at configuration setting & metadata cache 108, then the storage controller **104** instructs the IO engine **106** to flush the data of configuration setting & metadata cache **108** to the storage device **112.**

If the storage device **112** is plugged into the system **100** after the storage controller **104** restarts, the storage controller **104** searches for data of configuration setting & metadata in the configuration setting & metadata cache **108** and extracts the required data from the storage device **112.** The storage controller **104** also extracts any other required data provided by the user to set or modify the system **100.** After extracting the required data from the storage device **112,** the extracted data is stored into the configuration setting & metadata cache **108** and the storage controller **104** is reconfigured based on the stored data. Once the reconfiguration is complete, the storage controller **104** resumes its operation.

To overcome the above-mentioned problems associated with unauthorized user access and/or hacking there is a need to establish a secure communication during read/write operation, to restore a session in case of it being interrupted during the session and to provide secured access to the storage device.

The present disclosure relates to a method and a system for performing secure read/write operations in a pluggable flash storage device. In one embodiment, a request for at least one of writing and reading of data in/from the pluggable flash storage device is received. Upon receiving a request for writing data, the storage device is authenticated based on a predetermined signature of the pluggable flash storage device. Upon authenticating the storage device, at least one of a user and a storage controller who made the request is also authenticated, and a write operation is performed based on successful authentication of the at least one of the user and the storage controller. By establishing secure communication between the storage device and the user or the storage controller during the read/write operation, the hacking of the data in the storage device or use of the storage device with wrong intent is avoided.

In the following detailed description of the embodiments of the disclosure, reference is made to the accompanying drawings that form a part hereof, and in which are shown by way of illustration specific embodiments in which the disclosure may be practiced. These embodiments are described in sufficient detail to enable those skilled in the art to practice the disclosure, and it is to be understood that other embodiments may be utilized and that changes may be made without departing from the scope of the present disclosure. The following description is, therefore, not to be taken in a limiting sense.

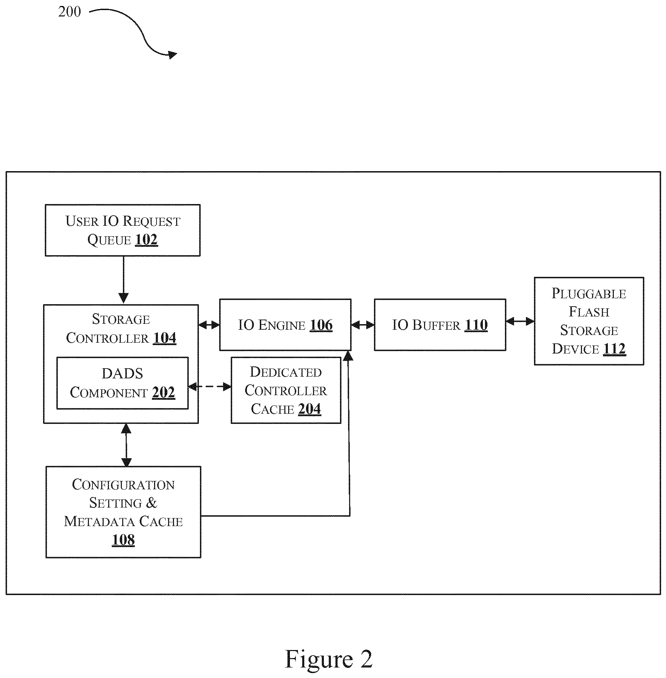

**Figure 2** illustrates a block diagram of an exemplary system for performing read/write operation in a pluggable flash storage device in accordance with some embodiments of the present disclosure.

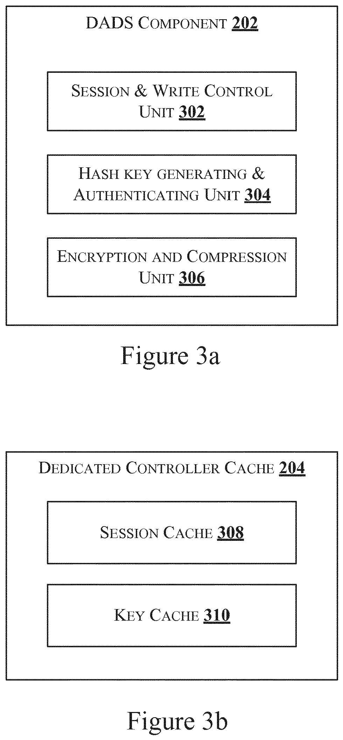

As illustrated, the system **200** comprises the user IO request queue **102,** the storage controller **104,** the IO Engine **106,** the configuration setting and metadata cache **108,** the IO buffer **110** and the storage device **112.** The system **200** further comprises a Device Authentication and Data Security (DADS) component **202** and a dedicated controller cache **204** coupled with the DADS component **202.** In one embodiment, the DADS component **202** may be implemented within the storage controller **104.** In another embodiment, the DADS component **202** may be externally coupled with the storage controller **104.** The DADS component **202** comprises one or more components for authenticating the user or the storage controller making the request for read/write operation and managing one or more sessions for performing read/write operation. As illustrated in **Figure 3a****,** the DADS component **202** may comprise a session & write control (SWCU) unit **302,** a hash key generating and authenticating unit (HKGAU) **304** and an encryption and compression unit (ECU) **306.**

The SWCU **302** is configured to control and manage one or more sessions between the storage controller **104** or the user and the storage device **112.** On receiving a request for a write operation by the storage controller **104,** the SWCU **302** establishes a session between the requesting user or storage controller **104** and the storage device **112,** generates a unique session ID and assigns the unique session ID to the established session. The SWCU **302** stores the session ID in the dedicated controller cache **204.** In one embodiment, the dedicated controller cache **204,** as illustrated in **Figure 3b****,** comprises a session cache **308** and a key cache **310.** The SWCU 302 stores the session ID in the session cache **308** for future use. For example, if the session is terminated during the operation, the SWCU **302** reestablishes the terminated session based on the last session ID stored in the session cache **308.** The SWCU **302** also prevents overwriting of the storage device **112** by another session running simultaneously. If any last session ID is available, then the SWCU **302** allows writing operation of the unfinished data of the last session before establishing a new session. The SWCU **302** continuously monitors the one or more sessions that are in progress and maintains at least one session between the storage device **112** and the user or the storage controller **104.**

The SWCU **302** is further configured to control write operations requested by the user or the storage controller **104.** In one embodiment, the SWCU **302** generates and provides a unique write access key to at least one of the user and the storage controller **104** and authenticates the user or the storage controller **104** based on the write access key provided. In one implementation, the SWCU **302** generates the unique write access key and stores the generated access key in the key cache **310** of the dedicated controller cache **204.** Once the session is established, the SWCU **302** compares the write access key provided by the user with the predetermined access key stored in the key cache **310** for the respective user or the storage controller **104.** If the comparison is successful, the SWCU **302** performs the write operation of the data into the storage device **112,** otherwise the write operation is not performed.

The HKGAU **304** is configured to authenticate the storage device **112** before performing the write operation. In one embodiment, the HKGAU **304** initially generates a unique signature for the storage device **112** and authenticates the storage device **112** based on the previously determined signature. In one implementation, HKGAU **304** initially generates a unique signature for the storage device **112** based on information associated with the storage device **112.** For example, the information associated with the storage device may include a physical serial number, a model number, a manufacturing identity number and/or the name of a manufacturer. The HKGAU **304** generates a pseudo number based on the information associated with the storage controller **104** and stores the generated pseudo number in the dedicated controller cache **204.** The pseudo number may be a pseudorandom number. The pseudorandom number may be generated by using the information associated with the storage device as the seed for a pseudorandom number generation algorithm. The pseudo number thus generated is also stored in a predefined non-volatile memory location of the storage device **112.** Upon generating the pseudo number, the HKGAU **304** processes the pseudo number and generates a hashed value of the pseudo number.

Further, the ECU **306** encrypts the hashed value into a signature and creates a predetermined signature for the storage device **112.** The signature thus created is stored in a predefined non-volatile memory location of the storage device **112.** The ECU **306** also encrypts the data to be stored in the storage device **112** using known encryption techniques. Further, the ECU **306** compresses the encrypted data using known compression techniques before storing in the storage device **112.** Thus the encryption and compression of the data ensures secured access of the data by preventing unauthorized access by user who is unaware of the encryption and compression techniques applied on the data.

Before performing the write operation, the HKGAU **304** verifies the signature of the storage device **112** stored in the predefined non-volatile memory location of the storage device **112.** For example, the HKGAU **304** retrieves the stored signature from the pre-defined memory location and the ECU **306** performs decryption and hashing on the signature to generate a pseudo number. Upon generating the pseudo number, the HKGAU **304** compares the generated pseudo number with a predetermined pseudo number stored in the predefined memory location of the dedicated controller cache **204.** Upon successful comparison, the HKGAU **304** generates a signal indicating the authenticity of the storage device **112.**

Upon authenticating the storage device **112** and the user or the storage controller **104,** the system **200** performs writing operation of data into the storage device **112.** In one embodiment, the ECU **306** encrypts the data to be written into the storage device **112** using known encryption techniques. Further, the ECU **306** compresses the encrypted data using known compression techniques. The compressed data is then stored in a predefined memory location in the storage device **112.**

When read operation is performed on the data stored in the storage device **112,** the ECU **306** performs decompression and decryption of data. The ECU **306** extracts the compressed data from the storage device **112,** performs decompression of the extracted data using known decompression techniques and decrypts the decompressed data using known decryption techniques to retrieve the raw data.

The dedicated controller cache **204** stores the information associated with the storage device **112,** the pseudo number, the last session ID and predetermined write/read access key.

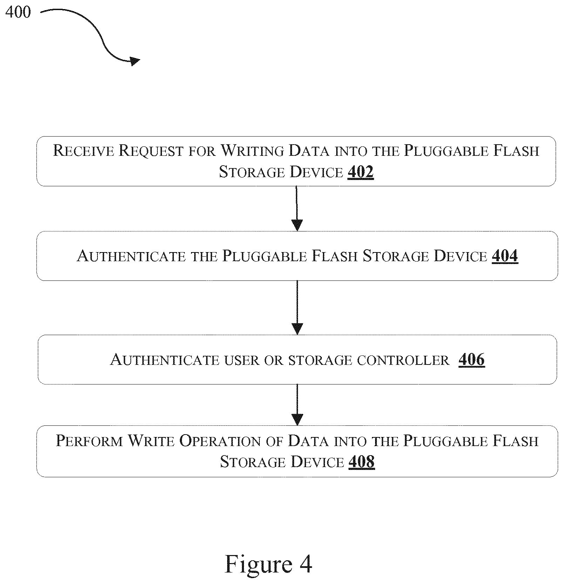

**Figure 4** illustrates a flowchart of an exemplary method of performing write operation into the pluggable flash storage device in accordance with some embodiments of the present disclosure.

As illustrated in **Figure 4****,** the method **400** comprises one or more blocks implemented by the system **200** for performing secure write operation in the storage device 112. The method **400** may be described in the general context of computer executable instructions. Generally, computer executable instructions can include routines, programs, objects, components, data structures, procedures, modules, and functions, which perform particular functions or implement particular abstract data types.

The order in which the method **400** is described is not intended to be construed as a limitation, and any number of the described method blocks can be combined in any order to implement the method **400.** Additionally, individual blocks may be deleted from the method **400** without departing from the scope of the subject matter described herein. Furthermore, the method **400** can be implemented in any suitable hardware, software, firmware, or combination thereof.

At block **402,** receive request for writing data into the storage device. In one embodiment, a request for writing data is received by the user IO request queue **102.** The user IO request queue **102** forwards the request to the storage controller **104.** The data to be written may include metadata, code images, diagnostic data such as core files and log files, and extended diagnostics associated with the storage controller **104.**

At block **404,** authenticate the storage device. In one embodiment, the HKGAU **304** authenticates the storage device **112** before performing the write operation. The HKGAU **304** verifies the signature of the storage device **112** stored in the predefined non-volatile memory location of the storage device **112.** In one embodiment, the HKGAU **304** initially generates a unique signature for the storage device **112** based on information associated with the storage device **112.** For example, the information may include at least physical serial number, model number, manufacturing identity number and name of manufacturer. The HKGAU **304** generates a pseudo number based on the information associated with the storage controller **104** and stores the generated pseudo number in the dedicated controller cache **204.** Upon generating the pseudo number, the HKGAU **304** processes the pseudo number and generates a hashed value of the pseudo number. The pseudo number thus generated is stored in a predefined non-volatile memory location of the storage device **112.** The signature thus created is stored in a predefined non-volatile memory location of the storage device **112.** Further, the ECU **306** encrypts the hashed value into a signature and creates a predetermined signature for the storage device **112.** The ECU **306** also encrypts and compresses the data to be stored in the storage device **112** using known encryption and compression techniques.

Upon receiving the request for write operation, the HKGAU **304** verifies the signature of the storage device **112** stored in the predefined non-volatile memory location of the storage device **112.** For example, the HKGAU **304** retrieves the stored signature from the pre-defined memory location and the ECU **306** performs decryption and hashing on the signature to generate a pseudo number. Upon generating the pseudo number, the HKGAU **304** compares the generated pseudo number with a predetermined pseudo number stored in the predefined memory location of the dedicated controller cache **204.** Upon successful comparison, the HKGAU **304** generates a signal indicating the authenticity of the storage device **112.**

At block **406,** authenticate user or the storage controller. In one embodiment, the SWCU **302** establishes a session between the user or the storage controller **104** and the storage device **112.** On receiving a request for write operation by the storage controller **104,** the SWCU **302** opens a session between the requested user or the storage controller **104** and the storage device **112,** generates a unique session ID and assigns the unique session ID to the opened session. The SWCU **302** stores the session ID in the dedicated controller cache **204** so that if any session is terminated during the write operation, the SWCU **302** reestablishes the terminated session based on the last session ID stored in the session cache **308.** The SWCU **302** also prevents overwriting of the storage device **112** by another session running simultaneously. If any last session ID is available, then the SWCU **302** allows writing operation of the unfinished data of the last session before establishing a new session. The SWCU **302** continuously monitors the one or more sessions that are in progress and maintains at least one session between the storage device **112** and the user or the storage controller **104.**

Upon establishing a valid session, the SWCU **302** authenticates the user or the storage controller **104** to perform the write operation. The SWCU **302** retrieves the write access key of the requested user or the storage controller **104** and compares with a predetermined write access key previously assigned to the user or the storage controller **104.** The SWCU **302** initially generates a unique write access key to each user and the storage controller **104** and stores the generated access key in the key cache **310** of the dedicated controller cache **204.** Once the session is established, the SWCU **302** compares the write access key provided by the user with the predetermined access key stored in the key cache **310** for the respective user or the storage controller **104.** If the comparison is successful, the SWCU **302** performs the write operation of the data into the storage device **112,** otherwise the write operation is prevented.

At block **408,** perform write operation of data into the storage device. In one embodiment, the system **100** writes data into the storage device **112,** upon authenticating the storage device **112** and the user or the storage controller **104.** In one embodiment, the ECU **306** encrypts the data to be written into the storage device **112** using known encryption techniques. Further, the ECU **306** compresses the encrypted data using known compression techniques. The compressed data is then stored in a predefined memory location in the storage device **112.**

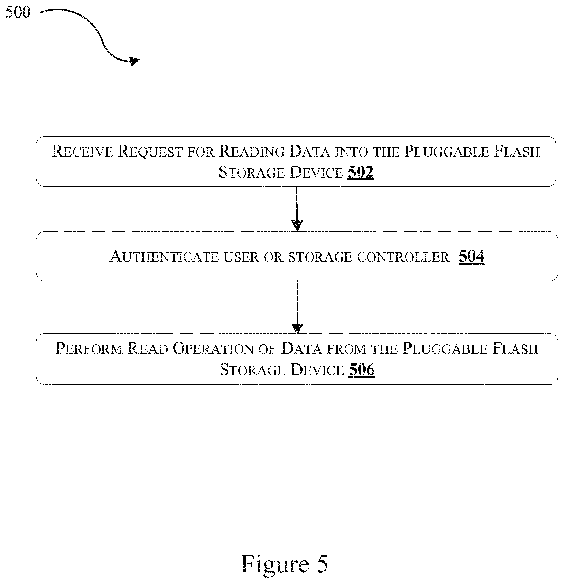

**Figure 5** illustrates a flowchart of an exemplary method of performing read operation from the pluggable flash storage device in accordance with some embodiments of the present disclosure.

As illustrated in **Figure 5****,** the method **500** comprises one or more blocks implemented by the system **200** for performing secure read operation in the storage device **112.** The method **500** may be described in the general context of computer executable instructions. Generally, computer executable instructions can include routines, programs, objects, components, data structures, procedures, modules, and functions, which perform particular functions or implement particular abstract data types.

The order in which the method **500** is described is not intended to be construed as a limitation, and any number of the described method blocks can be combined in any order to implement the method **500.** Additionally, individual blocks may be deleted from the method **500** without departing from the scope of the subject matter described herein. Furthermore, the method **500** can be implemented in any suitable hardware, software, firmware, or combination thereof.

At block **502,** receive request for reading data from the storage device. In one embodiment, a request for reading data is received by the user IO request queue **102.** The user IO request queue **102** forwards the request to the storage controller **104.** The data to be read may include metadata, code images, diagnostic data such as core files and log files, and extended diagnostics associated with the storage controller **104.**

At block **504,** authenticate user or the storage controller. In one embodiment, the SWCU **302** retrieves the read access key of the requested user or the storage controller **104** and compares with a predetermined read access key previously assigned to the user or the storage controller **104.** In one embodiment, the SWCU **302** initially generates a unique read access key to each user and the storage controller **104** and stores the generated access key in the key cache **310** of the dedicated controller cache **204.** Once the session is established to perform read operation, the SWCU **302** compares the read access key provided by the user with the predetermined access key stored in the key cache **310** for the respective user or the storage controller **104.** If the comparison is successful, the SWCU **302** performs the read operation of the data from the storage device **112.** If the comparison is unsuccessful, then the read operation requested by an unauthorized user is prevented.

At block **506,** perform read operation of data from the storage device. In one embodiment, the ECU **306** extracts the compressed data from the storage device **112,** performs decompression of the extracted data using known decompression techniques and decrypts the decompressed data using known decryption techniques to retrieve the raw data.

As described above, the system **200,** amongst other things, include routines, programs, objects, components, and data structures, which perform particular tasks or implement particular abstract data types. The system **200** may also be implemented as, signal processor(s), state machine(s), logic circuitries, and/or any other device or component that manipulate signals based on operational instructions. Further, the system 100 can be implemented by one or more hardware components, by computer-readable instructions executed by a processing unit, or by a combination thereof.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., are non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A method of performing a secure write operation into a pluggable flash storage device, said method comprising:
receiving (402), by an authentication component (202), a request provided by a user or a storage controller (104) for writing data into the pluggable flash storage device (112);
**characterised by** the following steps:
upon receiving the request for writing data, authenticating (404), by the authentication component (202) implemented within or externally coupled to the storage controller (104), the pluggable flash storage device by verifying a signature of the pluggable flash storage device retrieved from the pluggable flash storage device;
determining, by the authentication component (202), whether a last session ID of a last session is available;
upon determining the last session ID is unavailable, establishing a new session with a new session ID; and
upon establishing the new session:
authenticating (406), by the authentication component (202), the user or the storage controller that provided the request for writing by comparing a write access key retrieved from the user or the storage controller respectively with a predetermined write access key stored in a key cache (310); and
performing (408) a write operation of data into the pluggable flash storage device upon authenticating the pluggable flash storage device and the user or the storage controller that provided the request for writing.

2. The method as claimed in claim 1, wherein the predetermined signature of the pluggable flash storage device is generated by the steps of:
extracting information associated with the pluggable flash storage device;
generating a pseudorandom number using a pseudorandom number generation algorithm based on the extracted information and storing the generated pseudorandom number in a predefined memory location of the storage controller;
processing the pseudorandom number using a hash function to generate a hashed value; and
generating the predetermined signature of the pluggable flash storage device by encrypting the hashed value.

3. The method as claimed in claim 2, wherein the extracted information associated with the pluggable flash storage device includes a physical serial number, a model number, a manufacturing identity number and/or the name of a manufacturer.

4. The method as claimed in any of the preceding claims, wherein authenticating the pluggable flash storage device comprises the steps of:
determining a signature of the pluggable flash storage device stored in a predefined memory location of the pluggable flash storage device;
decrypting the determined signature into a hashed value;
generating a pseudorandom number based on the hashed value;
comparing the generated pseudorandom number of the pluggable flash storage device with a predetermined pseudorandom number stored in the predefined memory location of the storage controller; and
authenticating the pluggable flash storage device based on the comparison.

5. The method as claimed in any of the preceding claims, further comprising:
upon determining that the last session ID is available:
reestablishing the last session;
performing a write operation of unfinished data of the last session; and
establishing the new session after performing the write operation of unfinished data of the last session.

6. The method as claimed in any of the preceding claims, wherein performing the write operation of data into the pluggable flash storage device comprising the steps of:
encrypting the data to be written in the pluggable flash storage device;
compressing the encrypted data into a compressed data; and
storing the compressed data in a predetermined memory location of the pluggable flash storage device.

7. The method of claim 6, further comprising:
upon receiving, from at least one of the user or the storage controller, a request for reading data from the pluggable flash storage device, authenticating at least one of the user and the storage controller by comparing a read access key provided respectively to at least one of the user and the storage controller with a predetermined read access key;
upon authenticating, extracting the compressed data from the predefined memory location of the pluggable flash storage device;
decompressing the extracted compressed data to obtain the encrypted data;
decrypting the encrypted data to generate the decrypted data; and
performing read operation of the decrypted data from the pluggable flash storage device.

8. The method as claimed in any of the preceding claims, wherein the predetermined write access key, the predetermined read access key, and/or the last session ID are stored in a predefined memory location of the storage controller.

9. The method as claimed in any of the preceding claims, wherein the predetermined write access key has been pre-generated by the authentication component for the user or storage component controller that provided the request for writing.

10. A system (200) for performing a secure write operation into a pluggable flash storage device (112), the system comprising:
a user IO request queue (102) for receiving one or more requests for at least one of reading and writing of data from at least one of a user and a storage controller (104);
the pluggable flash storage device (112);
an IO engine (106) coupled with the pluggable flash storage device;
the storage controller (104) coupled with the user IO request queue (102) and the IO engine (106), the storage controller (104) comprising means (202) for performing a method as recited in any of the preceding claims.

11. The system as claimed in claim 10, further comprising a dedicated controller cache (204) coupled with the storage controller (104), configured to store the predetermined write access key, the predetermined read access key, the pseudorandom number and/or the last session ID in a predefined memory location of the storage controller.

12. A non-transitory computer readable medium including instructions stored thereon that when processed by at least one processor cause a system to perform the method of any of claims 1 to 9.

## Patentansprüche

1. Verfahren zum Ausführen einer sicheren Schreiboperation in eine steckbaren Flash-Speichereinheit, wobei das Verfahren aufweist:
Empfangen (402) einer Anforderung, die von einem Benutzer oder einem Speichercontroller (104) zum Schreiben von Daten in die steckbare Flash-Speichereinheit (112) bereitgestellt wird, von einer Authentifizierungskomponente (202);
**gekennzeichnet durch** die folgenden Schritte:
nach dem Empfangen der Anforderung zum Schreiben von Daten Authentifizieren (404) der steckbaren Flash-Speichereinheit durch die Authentifizierungskomponente (202), die in dem Speichercontroller (104) implementiert oder extern mit diesem verbunden ist, durch Überprüfen einer Signatur der steckbaren Flash-Speichereinheit, die von der steckbaren Flach-Speichereinheit abgerufen wird;
Bestimmen durch die Authentifizierungskomponente (202), ob eine letzte Sitzungs-ID einer letzten Sitzung verfügbar ist;
nach dem Bestimmen, dass die letzte Sitzungs-ID nicht verfügbar ist, Erstellen einer neuen Sitzung mit einer neuen Sitzungs-ID; und
nach dem Erstellen der neuen Sitzung:
Authentifizieren (406) des Benutzers oder des Speichercontrollers, der die Anforderung zum Schreiben bereitgestellt hat, durch die Authentifizierungskomponente (202), indem ein Schreibzugriffschlüssel, der jeweils von dem Benutzer oder dem Speichercontroller abgerufen wurde, mit einem vorgegebenen Schreibzugriffschlüssel verglichen wird, der in einem Schlüssel-Cache (310) gespeichert ist; und
Ausführen (408) einer Schreiboperation von Daten in die steckbare Flash-Speichereinheit nach dem Authentifizieren der steckbaren Flash-Speichereinheit und des Benutzers oder des Speichercontrollers, der die Anforderung zum Schreiben bereitgestellt hat.

2. Verfahren nach Anspruch 1, wobei die vorgegebene Signatur der steckbaren Flash-Speichereinheit durch die Schritte erzeugt wird zum:
Extrahieren von der steckbaren Flash-Speichereinheit zugehörigen Informationen; Generieren einer Pseudozufallszahl unter Verwendung eines Pseudozufallszahl-Generierungsalgorithmus auf Grundlage der extrahierten Informationen, und Speichern der generierten Pseudozufallszahl in einem vordefinierten Speicherplatz des Speichercontrollers;
Verarbeiten der Pseudozufallszahl unter Verwendung einer Hash-Funktion zum Generieren eines Hash-Werts; und
Generieren der vorgegebenen Signatur der steckbaren Flash-Speichereinheit durch Verschlüsseln des Hash-Werts.

3. Verfahren nach Anspruch 2, wobei die der steckbaren Flash-Speichereinheit zugehörigen Informationen eine physische Seriennummer, eine Modellnummer, eine Fabrikationsidentifikationsnummer und/oder den Namen eines Hersteller enthalten.

4. Verfahren nach einem der vorhergehenden Ansprüche, wobei das Authentifizieren der steckbaren Flash-Speichereinheit die Schritte aufweist zum:
Bestimmen einer Signatur der steckbaren Flash-Speichereinheit, die in einem vordefinierten Speicherplatz der steckbaren Flash-Speichereinheit gespeichert ist; Entschlüsseln der bestimmten Signatur in einen Hash-Wert; Generieren einer Pseudozufallszahl auf Grundlage des Hash-Werts; Vergleichen der generierten Pseudozufallszahl der steckbaren Flash-Speichereinheit mit einer vorgegebenen Pseudozufallszahl, die in dem vordefinierten Speicherplatz des Speichercontrollers gespeichert ist; und
Authentifizieren der steckbaren Flash-Speichereinheit auf Grundlage des Vergleichs.

5. Verfahren nach einem der vorhergehenden Ansprüche, ferner aufweisend:
Nach dem Bestimmen, dass die letzte Sitzungs-ID verfügbar ist: erneutes Erstellen der letzten Sitzung;
Ausführen einer Schreiboperation von nicht beendeten Daten der letzten Sitzung; und Erstellen der neuen Sitzung nach dem Ausführen der Schreiboperation von nicht beendeten Daten der letzten Sitzung.

6. Verfahren nach einem der vorhergehenden Ansprüche, wobei das Ausführen der Schreiboperation von Daten in die steckbare Flash-Speichereinheit die Schritte aufweist zum:
Verschlüsseln der Daten, die in die steckbare Flash-Speichereinheit geschrieben werden sollen; Komprimieren der verschlüsselten Daten zu komprimierten Daten; und
Speichern der komprimierten Daten in einem vorgegebenen Speicherplatz der steckbaren Flash-Speichereinheit.

7. Verfahren nach Anspruch 6, ferner aufweisend:
nach dem Empfangen einer Anforderung zum Lesen von Daten aus der steckbaren Flash-Speichereinheit von mindestens einem von dem Benutzer oder dem Speichercontroller, Authentifizieren von mindestens einem von dem Benutzer oder dem Speichercontroller durch Vergleichen eines Lesezugriffschlüssels, der jeweils für mindestens einen von dem Benutzer oder dem Speichercontroller bereitgestellt wird, mit einem vorgegebenen Lesezugriffschlüssel;
Extrahieren, nach dem Authentifizieren, der komprimierten Daten aus dem vordefinierten Speicherplatz der steckbaren Flash-Speichereinheit;
Dekomprimieren der extrahierten komprimierten Daten, um die verschlüsselten Daten zu erhalten; Entschlüsseln der verschlüsselten Daten, um die entschlüsselten Daten zu erzeugen; und
Ausführen einer Leseoperation der entschlüsselten Daten aus der steckbaren Flash-Speichereinheit.

8. Verfahren nach einem der vorhergehenden Ansprüche, wobei der vorgegebene Schreibzugriffschlüssel, der vorgegebene Lesezugriffschlüssel und/oder die letzte Sitzungs-ID in einem vordefinierten Speicherplatz des Speichercontrollers gespeichert sind.

9. Verfahren nach einem der vorhergehenden Ansprüche, wobei der vorgegebene Schreibzugriffschlüssel durch die Authentifizierungskomponente für den Benutzer oder den Speicherkomponentencontroller vorab generiert wurde, der die Anforderung zum Schreiben bereitgestellt hat.

10. System (200) zum Ausführen einer sicheren Schreiboperation in eine steckbaren Flash-Speichereinheit (112), wobei das System aufweist:
eine Benutzer-E/A-Warteschlange (102) zum Empfangen von einer oder mehreren Anforderungen für mindestens eines von Lesen und Schreiben von Daten von mindestens einem von einem Benutzer und einem Speichercontroller (104); die steckbare Flash-Speichereinheit (112);
eine E/A-Engine (106), die mit der steckbaren Flash-Speichereinheit verbunden ist;
den Speichercontroller (104), der mit der Benutzer-E/A-Warteschlange (102) und der E/A-Engine (106) verbunden ist, den Speichercontroller (104), der Mittel (202) zum Ausführen eines Verfahren nach einem der vorhergehenden Ansprüche aufweist.

11. System nach Anspruch 10, ferner aufweisend einen dedizierten Controller-Cache (204), der mit dem Speichercontroller (104) verbunden ist, der konfiguriert ist, um den vorgegebenen Schreibzugriffschlüssel, den vorgegebenen Lesezugriffschlüssel, die Pseudozufallszahl und/oder die letzte Sitzungs-ID in einem vordefinierten Speicherplatz des Speichercontrollers zu speichern.

12. Nichtflüchtiges computerlesbares Medium mit darauf gespeicherten Anweisungen, die, wenn sie von mindestens einem Prozessor ausgeführt werden, ein System veranlassen, das Verfahren nach einem der Ansprüche 1 bis 9 auszuführen.

## Revendications

1. Procédé d'exécution d'une opération d'écriture sécurisée dans un dispositif de stockage flash enfichable, ledit procédé comprenant :
la réception (402), par un composant d'authentification (202), d'une requête présentée par un utilisateur ou un contrôleur de stockage (104) d'écriture de données dans le dispositif de stockage flash enfichable (112) ;
**caractérisé par** les étapes suivantes :
à la réception de la requête d'écriture de données, l'authentification (404), par le composant d'authentification (202) déployé dans ou couplé de manière externe au contrôleur de stockage (104), du dispositif de stockage flash enfichable en vérifiant une signature du dispositif de stockage flash enfichable récupérée depuis le dispositif de stockage flash enfichable ;
la détermination, par le composant d'authentification (202), si un dernier identifiant de session d'une dernière session est disponible ;
à la détermination que le dernier identifiant de session est indisponible, l'établissement d'une nouvelle session avec un nouvel identifiant de session ; et
à l'établissement de la nouvelle session :
l'authentification (406), par le composant d'authentification (202), de l'utilisateur ou du contrôleur de stockage qui a présenté la requête d'écriture en comparant une clé d'accès d'écriture récupérée depuis l'utilisateur ou le contrôleur de stockage respectivement avec une clé d'accès d'écriture prédéterminée stockée dans un cache de clé (310) ; et
l'exécution (408) d'une opération d'écriture de données dans le dispositif de stockage flash enfichable à l'authentification du dispositif de stockage flash enfichable et de l'utilisateur ou du contrôleur de stockage qui a présenté la requête d'écriture.

2. Procédé selon la revendication 1, dans lequel la signature prédéterminée du dispositif de stockage flash enfichable est générée par les étapes de :
extraction d'informations associées au dispositif de stockage flash enfichable ; génération d'un nombre pseudo aléatoire en utilisant un algorithme de génération de nombre pseudo aléatoire sur la base des informations extraites et stockage du nombre pseudo aléatoire généré à un emplacement de mémoire prédéfini du contrôleur de stockage ;
traitement du nombre pseudo aléatoire en utilisant une fonction de hachage pour générer une valeur hachée ; et
génération de la signature prédéterminée du dispositif de stockage flash enfichable en cryptant la valeur hachée.

3. Procédé selon la revendication 2, dans lequel les informations extraites associées au dispositif de stockage flash enfichable incluent un numéro de série physique, un numéro de modèle, un numéro d'identité de fabrication et/ou le nom d'un fabricant.

4. Procédé selon l'une quelconque des revendications précédentes, dans lequel l'authentification du dispositif de stockage flash enfichable comprend les étapes de :
détermination d'une signature du dispositif de stockage flash enfichable stockée à un emplacement de mémoire prédéfini du dispositif de stockage flash enfichable ; décryptage de la signature déterminée en une valeur hachée ; génération d'un nombre pseudo aléatoire basé sur la valeur hachée ; comparaison du nombre pseudo aléatoire généré du dispositif de stockage flash enfichable à un nombre pseudo aléatoire prédéterminé stocké à l'emplacement de mémoire prédéfini du contrôleur de stockage ; et
authentification du dispositif de stockage flash enfichable sur la base de la comparaison.

5. Procédé selon l'une quelconque des revendications précédentes, comprenant en outre :
à la détermination que le dernier identifiant de session est disponible : le ré-établissement de la dernière session ;
l'exécution d'une opération d'écriture de données inachevées de la dernière session ; et
l'établissement de la nouvelle session après l'exécution de l'opération d'écriture de données inachevées de la dernière session.

6. Procédé selon l'une quelconque des revendications précédentes, dans lequel l'exécution de l'opération d'écriture de données dans le dispositif de stockage flash enfichable comprend les étapes de :
cryptage des données devant être écrites dans le dispositif de stockage flash enfichable ; compression des données cryptées dans une donnée compressée ; et
stockage de la donnée compressée à un emplacement de mémoire prédéterminé du dispositif de stockage flash enfichable.

7. Procédé selon la revendication 6, comprenant en outre :
à la réception, en provenance au moins de l'un de l'utilisateur ou du contrôleur de stockage, d'une requête de lecture de données en provenance du dispositif de stockage flash enfichable, l'authentification au moins de l'un de l'utilisateur et du contrôleur de stockage en comparant une clé d'accès de lecture présentée respectivement à au moins l'un de l'utilisateur et du contrôleur de stockage à une clé d'accès de lecture prédéterminée ;
à l'authentification, l'extraction de la donnée compressée depuis un emplacement de mémoire prédéterminé du dispositif de stockage flash enfichable ;
ladécompression des données compressées extraites pour obtenir les données cryptées ;
ledécryptage des données cryptées pour générer les données décryptées ; et
l'exécution de l'opération de lecture des données décryptées depuis le dispositif de stockage flash enfichable.

8. Procédé selon l'une quelconque des revendications précédentes, dans lequel la clé d'accès d'écriture prédéterminée, la clé d'accès de lecture prédéterminée, et/ou le dernier identifiant de session sont stockés à un emplacement de mémoire prédéfini du contrôleur de stockage.

9. Procédé selon l'une quelconque des revendications précédentes, dans lequel la clé d'accès d'écriture prédéterminée a été pré-générée par le composant d'authentification pour l'utilisateur ou le contrôleur de composant de stockage qui a présenté la requête d'écriture.

10. Système (200) destiné à exécuter une opération d'écriture sécurisée dans un dispositif de stockage flash enfichable (112), le système comprenant :
une file d'attente de requêtes d'ES utilisateur (102) destinée à recevoir une ou plusieurs requêtes d'au moins l'une parmi la lecture et l'écriture de données en provenance d'au moins l'un d'un utilisateur et d'un contrôleur de stockage (104) ; le dispositif de stockage flash enfichable (112) ;
un moteur d'ES (106) couplé au dispositif de stockage flash enfichable ;
le contrôleur de stockage (104) couplé à la file d'attente de requêtes d'ES utilisateur (102) et au moteur d'ES(106), le contrôleur de stockage (104) comprenant un moyen (202) d'exécution d'un procédé selon l'une quelconque des revendications précédentes.

11. Système selon la revendication 10, comprenant en outre un cache de contrôleur dédié (204) couplé au contrôleur de stockage (104), configuré pour stocker la clé d'accès d'écriture prédéterminée, la clé d'accès de lecture prédéterminée, le nombre pseudo aléatoire et/ou le dernier identifiant de session à un emplacement de mémoire prédéfini du contrôleur de stockage.

12. Support non-transitoire lisible par ordinateur incluant des instructions stockées sur celui-ci, lesquelles une fois exécutées par au moins un processeur, permettent à un système de mettre en oeuvre le procédé selon l'une quelconque des revendications 1 à 9.
